# DEMANDE DE BREVET EUROPEEN

(11) **EP 1 031 492 A1**
(43) Date de publication de la demande: **30.08.2000**
(21) Numéro de dépôt: 00400471.9
(22) Date de dépôt: 21.02.2000
(51) Int. Cl.: B62D 6/00, B62D 6/04

(54) **Procédé de commande du couple d'assistance applique au mécanisme de direction d'un véhicule automobile et dispositif pour la mise en oeuvre de ce procédé**

(30) Priorité: 23.02.1999 FR 9902236
(71) Demandeur: Renault, 92100 Boulogne Billancourt (FR)
(72) Inventeur: Bello, Jean-Luc, 27940 Aubevoye (FR); Coffin, Florent, 27600 Gaillon (FR)

(57) **Abrégé**

On calcule le couple d'assistance de consigne (C_{cons}) et on commande un organe moteur (7) délivrant un couple d'assistance au mécanisme de direction (6), en fonction du couple de consigne. Ce couple est calculé à l'aide de lois de commande et de stratégies additionnelles de compensation de phénomènes affectant le mécanisme de direction du véhicule. Selon l'une desdites stratégies additionnelles, on assure une compensation active du tirage du véhicule, dû au dévers de la chaussée sur laquelle roule le véhicule et/ou à un vent latéral. Pour ce faire, on mesure l'angle (α) de rotation du volant (1) de direction du véhicule et on sélectionne l'une de première et deuxième stratégies de compensation de tirage suivant que ledit angle (α) est inférieur ou supérieur à une valeur de seuil (αₛ) prédéterminée.

## Description

La présente invention est relative à un procédé de commande du couple d'assistance appliqué au mécanisme de direction d'un véhicule automobile par un organe moteur d'assistance, selon lequel on calcule le couple d'assistance de consigne et on commande ledit organe moteur en fonction dudit couple de consigne, ledit couple étant calculé à l'aide de lois de commande et de stratégies additionnelles de compensation de phénomènes affectant le mécanisme de direction du véhicule. La présente invention est aussi relative à un dispositif pour la mise en oeuvre de ce procédé.

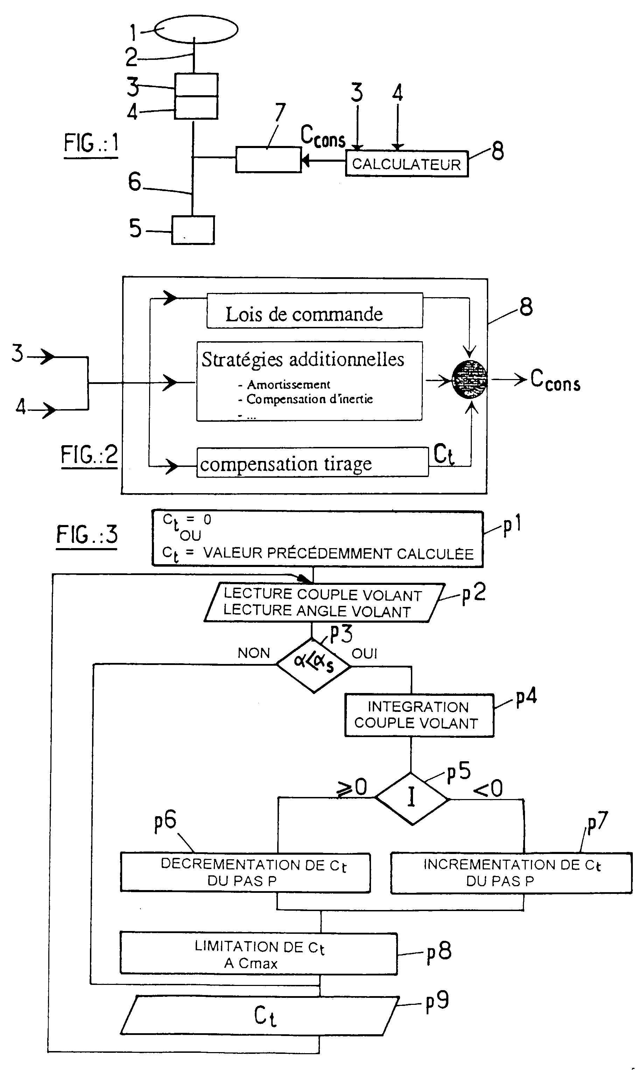

On connaît un tel procédé de commande du couple d'assistance, mis en oeuvre à l'aide du dispositif schématisé à la figure 1 du dessin annexé. Sur cette figure, on a représenté le volant 1 de direction d'un véhicule automobile monté sur un arbre 2 portant un couplemètre 3 et un capteur 4 d'angle de rotation du volant, cet arbre 2 étant couplé aux roues avant 5 d'un véhicule automobile par un mécanisme de direction 6. Un tel mécanisme de direction de véhicule automobile est couramment couplé à un organe moteur 7, un moteur électrique par exemple, susceptible de lui fournir un couple, dit couple d'assistance, permettant de réduire celui appliqué au volant 1 par le conducteur du véhicule, de manière à rendre la conduite de ce dernier moins pénible.

Un calculateur 8 commande le couple délivré par le moteur 7. Dans le cas d'un mécanisme de direction à colonne ou à pignon, le calculateur 8 calcule une valeur de consigne C_{cons} du couple d'assistance, régissant le couple délivré par le moteur 7. Pour ce faire, le calculateur reçoit des signaux de divers capteurs implantés dans le véhicule, notamment des capteurs 3 et 4 précités et d'un capteur de mesure de la vitesse du véhicule. Le capteur 4 délivre un signal représentatif d'un angle α de rotation du volant (ou angle "volant") mesuré à partir d'un position de référence pour laquelle α = 0 et qui correspond à la position du volant en l'absence de tout braquage des roues du véhicule.

Le couple appliqué par le conducteur au volant du véhicule est évidemment le paramètre le plus important figurant dans les lois de commande exécutées par le calculateur 8, dûment programmé à cet effet (voir l'organigramme des fonctions de calcul du couple de consigne C_{cons} exécutées par le calculateur 8, représenté à la figure 2).

Le calculateur 8 peut exécuter en outre des stratégies additionnelles pour tenir compte de situations ou de phénomènes spécifiques affectant le mécanisme de direction du véhicule. C'est ainsi que le roulement du véhicule sur une chaussée à surface irrégulière fait "remonter" dans le véhicule, et en particulier dans son mécanisme de direction, des chocs qu'il convient d'amortir pour le confort du conducteur et la sécurité du véhicule. De même, le mécanisme de direction, et en particulier le moteur d'assistance, présente une inertie qui doit être compensée.

Parmi les autres phénomènes susceptibles d'affecter le mécanisme de direction du véhicule, l'un des plus connus est celui du "tirage" du véhicule lorsque le véhicule circule sur une chaussée présentant un dévers, c'est-à-dire une pente dans une direction transversale. Cette pente est le plus souvent due au "bombement" de la chaussée, nécessaire pour assurer l'écoulement des eaux de pluie à l'écart de cette chaussée. Le dévers de la chaussée a pour effet de tirer le véhicule vers l'extérieur de la chaussée.

On observe encore ce phénomène de tirage du véhicule quand celui-ci roule dans un virage relevé, ou quand un vent latéral balaye la chaussée de circulation. Dans ce dernier cas, c'est l'orientation du vent qui détermine le sens dans lequel le véhicule est tiré par ce vent.

En ce qui concerne le dévers dû au bombement de la chaussée, des réglementations limitent en général la pente de cette chaussée qui résulte de ce bombement. Par exemple en France, sur autoroute ou voie rapide, le dévers autorisé est de 2,5 %. Sur le reste du réseau routier, les valeurs de dévers observées sont assez variables.

Les constructeurs automobiles font en sorte que les pneumatiques du véhicule et, parfois, les ressorts de suspension de l'avant du véhicule compensent un dévers "moyen" pour éviter que la correction nécessaire ne soit développée par le conducteur, et donc pour améliorer le confort de conduite. Les dévers s'écartant d'une valeur moyenne ne peuvent être compensés par ces moyens purement mécaniques. En outre, ceux-ci doivent être adaptés au type de conduite, à droite ou à gauche, autorisé dans tel ou tel pays, ce qui est coûteux pour les constructeurs automobiles. L'existence de deux types de véhicules n'est pas sans inconvénient, en outre, quand un véhicule conçu pour rouler dans un pays à conduite à droite, par exemple, vient à rouler dans un pays à conduite à gauche. Egalement, la précision de la correction ainsi obtenue est tributaire des dispersions de caractéristiques qui affectent les fabrications en grande série d'organes ou ensembles mécaniques, comme c'est le cas dans l'industrie automobile.

Il résulte de ce qui précède qu'un véhicule a toujours tendance à s'écarter du cap imposé par le conducteur du fait du "tirage" qui résulte du dévers de la chaussée mais aussi, éventuellement, du fait d'un vent latéral qui peut accentuer ce phénomène de tirage.

Pour aider le conducteur à maintenir ce cap, on connaît des brevets EP 791 522 et US 5 668 722 des stratégies de rappel du volant à sa position neutre (α = 0) quand l'angle volant évolue dans la zone "morte" voisine de α = 0. Ces stratégies tiennent compte de la vitesse de rotation du volant dans le calcul du couple d'assistance à fournir au mécanisme de direction pour limiter le "flou" de la direction et améliorer ainsi la stabilité du véhicule.

Ces stratégies peuvent, dans une certaine mesure, aider le conducteur à corriger un tirage du véhicule dû à un dévers de la chaussée ou à un vent latéral, mais seulement sur détection d'une vitesse de rotation du volant significative d'un braquage des roues initié par le conducteur pour compenser ce tirage. Il s'agit donc là d'une compensation passive. Il serait évidemment préférable, notamment du point de vue "confort de conduite" qu'une telle compensation puisse être obtenue sans intervention préalable du conducteur.

La présente invention a précisément pour but de fournir un procédé de commande du couple d'assistance appliqué au mécanisme de direction d'un véhicule automobile, qui assure une compensation automatique du tirage du véhicule, et qui ne présente donc pas l'inconvénient expliqué ci-dessus.

La présente invention a aussi pour but de fournir un dispositif pour la mise en oeuvre de ce procédé.

On atteint ces buts de l'invention, ainsi que d'autres qui apparaîtront à la lecture de la description qui va suivre, avec un procédé de commande du couple d'assistance appliqué au mécanisme de direction d'un véhicule automobile par un organe moteur d'assistance, selon lequel on calcule un couple d'assistance de consigne et on commande ledit organe moteur en fonction dudit couple de consigne, ledit couple étant calculé à l'aide de lois de commande et de stratégies additionnelles de compensation de phénomènes affectant le mécanisme de direction du véhicule, ce procédé étant remarquable en ce que, selon l'une au moins desdites stratégies additionnelles, on assure automatiquement une compensation active du tirage du véhicule, dû au dévers de la chaussée sur laquelle roule le véhicule et/ou à un vent latéral.

Suivant un mode de mise en oeuvre préféré de l'invention, on mesure l'angle de rotation du volant de direction du véhicule et on sélectionne l'une de première et deuxième stratégies de compensation de tirage suivant que ledit angle est respectivement inférieur ou supérieur à une valeur de seuil prédéterminée. Selon ladite première stratégie, on mesure le couple appliqué par le conducteur du véhicule au volant de direction, on détermine le signe de la valeur moyenne de ce couple sur un intervalle de temps prédéterminé et on incrémente ou décrémente d'un pas la valeur courante d'un couple de compensation de tirage suivant que ledit signe est négatif ou positif, respectivement.

Selon ladite deuxième stratégie, on intègre au couple d'assistance de consigne un couple de compensation de tirage de valeur égale à celle du dernier couple de compensation de tirage calculé.

D'autres caractéristiques et avantages de la présente invention apparaîtront à la lecture de la description qui va suivre et à l'examen du dessin annexé dans lequel :
- la figure 1 est un schéma d'un dispositif pour la mise en oeuvre de la présente invention, déjà partiellement décrit en préambule de la présente description,
- la figure 2 est un organigramme des lois de commande et des stratégies additionnelles développées par les moyens de calcul du dispositif de la figure 1, organigramme déjà partiellement décrit en préambule de la présente description, et
- la figure 3 est un organigramme d'un programme de calcul d'un couple de compensation de tirage exécuté par ces moyens de calcul, pour mettre en oeuvre le procédé suivant l'invention.

Comme on le verra dans la suite, le dispositif suivant l'invention permet de calculer un couple de compensation de tirage à l'aide de signaux délivrés par seulement deux capteurs, à savoir le capteur de couple "conducteur" 3 et le capteur d'angle volant 4, comme représenté à la figure 1. Bien entendu, pour l'exécution des lois de commande classiques intervenant dans le calcul du couple de consigne C_{cons}, le dispositif peut requérir des informations venues d'autres capteurs, tels qu'un capteur de vitesse du véhicule, comme on l'a vu plus haut.

Comme représenté sur l'organigramme de la figure 2, le dispositif suivant l'invention permet de calculer un couple de compensation de tirage Cₜ qui vient s'ajouter aux composantes du couple de consigne C_{cons} qui proviennent des lois de commande ou des stratégies additionnelles décrites en préambule de la présente description. On ne décrira dans la suite que les moyens mis en oeuvre pour calculer le couple de compensation de tirage, ceux nécessaires à l'exécution des lois de commande et des stratégies additionnelles, d'amortissement et de compensation d'inertie par exemple, pouvant être classiques et donc bien connues de l'homme de métier.

Le calculateur 8 du dispositif pour la mise en oeuvre de la présente invention comprend des mémoires de programme chargées des lois de commande et autres stratégies à exécuter. Suivant la présente invention, il comprend en outre une mémoire conçue pour stocker la valeur précédemment calculée, ou "courante", du couple de compensation de tirage Cₜ et des moyens pour initialiser à zéro cette valeur à chaque redémarrage du véhicule (pas p₁ de l'organigramme de la figure 3).

Au pas p₂ de cet organigramme, le calculateur 8 procède à une lecture du signal délivré par le capteur 4, soit à une lecture de l'angle volant α. L'angle volant α est lu et comparé à une valeur de seuil prédéterminée αₛ (pas p₃). Si α est tel que α < αₛ, le calculateur 8 exécute une première stratégie de calcul du couple Cₜ qui consiste à déterminer d'abord le signe de la valeur moyenne du couple appliqué par le conducteur du véhicule sur le volant pendant un intervalle de temps Tᵢ de durée prédéterminée, ce signe étant représentatif du sens du couple appliqué par le conducteur sur le volant pour compenser un tirage, à droite ou à gauche, subi par le véhicule.

Pour ce faire, le calculateur intègre (pas p₄) le couple conducteur sur l'intervalle de temps Tᵢ. En variante, on peut remplacer cette intégration par un calcul de la moyenne du couple sur cet intervalle de temps. A titre d'exemple illustratif et non limitatif, on peut choisir Tᵢ = 0,5 secondes.

L'intégrale I ainsi calculée est comparée à zéro (pas p₅). Si l'intégrale I (ou la moyenne) est telle que I ≥ 0, on décrémente (pas p₆) le couple Cₜ en mémoire d'un pas P. Dans le cas contraire ou I < 0, on incrémente (pas p₇) ce couple du même pas P. Le pas P est choisi suffisamment petit pour que le conducteur ne perçoive pas l'incrémentation ou la décrémentation ainsi réalisée. On peut choisir, à titre d'exemple seulement, P = 0,05 N.m. ce pas P peut aussi être paramétré, en fonction de la valeur de I, par exemple, ou de la moyenne du couple.

Au pas p₈, on compare le couple Cₜ résultant à un couple maximum Cₘₐₓ tel que par exemple Cₘₐₓ = 1,5 N.m, et on écrête éventuellement Cₜ si Cₜ > Cₘₐₓ en sélectionnant alors Cₘₐₓ comme valeur du couple de compensation de tirage à intégrer dans le calcul du couple d'assistance C_{cons} (pas p₉). Le calculateur 8 reprend alors au pas p₂ un nouveau cycle de calcul de Cₜ pour actualiser la valeur de ce couple.

La stratégie décrite ci-dessus, appliquée quand α < αₛ correspond à une situation dans laquelle le conducteur maintient le cap du véhicule sensiblement en ligne droite. Bien entendu, l'angle αₛ est à définir en fonction de l'importance du tirage que l'on souhaite compenser.

Lorsque le véhicule circule en virage, on a α > αₛ et le calculateur applique alors une deuxième stratégie de calcul du couple Cₜ de compensation du tirage qui consiste à intégrer au calcul de C_{cons} un couple Cₜ de valeur égale à la valeur précédemment calculée de ce couple. Comme en virage il n'est pas possible de détecter l'angle volant supplémentaire dû au tirage et/ou au vent latéral, on bloque Cₜ à la valeur de consigne précédente. Pour des raisons de sécurité, on ne peut annuler Cₜ lors d'une entrée dans un virage (α > α₅) car il pourrait y avoir alors un à-coup de couple, surtout si Cₜ > 1 N.m. De plus, on peut supposer qu'après la sortie du virage, on retrouve la même situation qu'avant l'entrée en virage, nécessitant donc le dernier Cₜ calculé comme valeur de consigne.

On comprend que, dans tous les cas, le couple de compensation de tirage calculé comme expliqué ci-dessus pourrait être limité en valeur de manière à ne pas masquer un tirage dû à un défaut du véhicule tel que la présence de pneumatiques d'usure ou de gonflage dissymétrique ou un parallélisme défectueux des roues d'un même train.

Si, comme on l'a indiqué plus haut à titre d'exemple, on limite Cₜ à une valeur maximale de 1,5 N.m et que Cₜ évolue par pas de 0,05 N.m sur un temps d'intégration de 0,5 seconde, le couple de compensation de tirage Cₜ atteint cette valeur maximale en 15 secondes.

Il apparaît maintenant que l'invention permet bien d'atteindre le but annoncé, à savoir assurer une compensation "active" du tirage subi par un véhicule, par l'intermédiaire du couple d'assistance appliqué au mécanisme de direction par un organe moteur d'assistance.

Bien entendu, l'invention n'est pas limitée au mode de réalisation décrit et représenté qui n'a été donné qu'à titre d'exemple.

## Revendications

1. Procédé de commande du couple d'assistance appliqué au mécanisme de direction (6) d'un véhicule automobile par un organe moteur (7) d'assistance, selon lequel on calcule le couple d'assistance de consigne (C_{cons}) et on commande ledit organe (7) moteur en fonction dudit couple de consigne, ledit couple étant calculé à l'aide de lois de commande et de stratégies additionnelles de compensation de phénomènes affectant le mécanisme de direction du véhicule, l'une au moins desdites stratégies additionnelles assurant automatiquement une compensation active du tirage du véhicule, dû au dévers de la chaussée sur laquelle roule le véhicule et/ou à un vent latéral,
caractérisé en ce qu'on mesure l'angle (α) de rotation du volant (1) de direction du véhicule et en ce qu'on sélectionne l'une de première et deuxième stratégies de compensation de tirage suivant que ledit angle (α) est inférieur ou supérieur à une valeur de seuil (αₛ) prédéterminée.

2. Procédé conforme à la revendication 1, caractérisé en ce que, selon ladite première stratégie, on mesure le couple appliqué par le conducteur du véhicule au volant de direction, on détermine le signe de la valeur moyenne de ce couple sur un intervalle de temps (Tᵢ) prédéterminé et on incrémente ou décrémente d'un pas (P) la valeur courante d'un couple (Cₜ) de compensation du tirage suivant que ledit signe est négatif ou positif, respectivement.

3. Procédé conforme à la revendication 2, caractérisé en ce qu'on détermine le signe global dudit couple appliqué par le conducteur (Tᵢ) par intégration ou moyennage dudit couple sur ledit intervalle de temps.

4. Procédé conforme à la revendication 3, caractérisé en ce que ledit pas (P) est fonction de la valeur (I) tirée de ladite intégration ou dudit moyennage.

5. Procédé conforme à l'une quelconque des revendications 2 à 4, caractérisé en ce qu'on écrête éventuellement à une valeur prédéterminée (Cₘₐₓ) le couple (Cₜ) de compensation de tirage entrant dans le calcul du couple d'assistance de consigne (C_{cons}).

6. Procédé conforme à l'une quelconque des revendications 1 à 5, caractérisé en ce que, selon ladite deuxième stratégie, on intègre au couple d'assistance de consigne final (C_{cons}), un couple (Cₜ) de compensation de tirage de valeur égale à celle du dernier couple de compensation de tirage calculé.

7. Dispositif pour la mise en oeuvre du procédé conforme à l'une quelconque des revendications 1 à 6, comprenant un couplemètre (3) délivrant un signal représentatif du couple appliqué par le conducteur au volant (1) de direction du véhicule, un capteur (4) de l'angle (α) du volant (1) par rapport à sa position neutre, un organe moteur (7) pour appliquer un couple d'assistance à un mécanisme de direction (6) du véhicule, et des moyens de calcul (8) d'une consigne de couple (C_{cons}) pour commander le couple délivré audit mécanisme (6) par ledit organe moteur (7), lesdits moyens (8) étant programmés pour calculer ledit couple de consigne (C_{cons}) à l'aide de lois de commande et de stratégies additionnelles de compensation de phénomènes affectant le mécanisme de direction (6) du véhicule, l'une au moins desdites stratégies additionnelles étant conçue pour assurer une compensation active du tirage du véhicule, dû au dévers de la chaussée sur laquelle roule ledit véhicule et/ou à un vent latéral,
caractérisé en ce que lesdits moyens de calcul (8) comprennent des première et deuxième stratégies de calcul du couple de compensation de tirage et des moyens de sélection de la première ou de la deuxième stratégies suivant que l'angle volant (α) courant est inférieur ou supérieur à une valeur de seuil (αₛ) prédéterminée.

8. Dispositif conforme à la revendication 7, caractérisé en ce qu'il comprend une mémoire de stockage de la valeur courante du couple de compensation (Cₜ) et des moyens d'initialisation à zéro de ladite mémoire, à chaque redémarrage du véhicule.
